## Europäisches Patentamt
## European Patent Office
## Office européen des brevets

(19)

(11) Publication number: **0 110 844**
**A1**

(12) **EUROPEAN PATENT APPLICATION**

(21) Application number: **83850237.5**

(22) Date of filing: **06.09.83**

(51) Int. Cl.³: **G 01 C 21/20**

(30) Priority: **08.09.82 SE 8205102**

(71) Applicant: **Ingenjörsfirma Leif Inglöv, Box 6089, S-600 06 Norrköping (SE)**

(43) Date of publication of application: **13.06.84** **Bulletin 84/24**

(72) Inventor: **Inglöv, Leif Ake, Odalgatan 8, S-602 29 Norrköping (SE)**

(84) Designated Contracting States: **DE FR GB**

(74) Representative: **Onn, Thorsten et al, AB STOCKHOLMS PATENTBYRA Box 3129, S-103 62 Stockholm (SE)**

(54) **Navigation device with nautical chart.**

(57) An appliance for navigation comprising a housing provided with rules on both sides for rendering possible parallelity positioning relative to meridians, for example on a nautical chart. From the housing a measuring pointer can be drawn out which consists of a stainless long spiral spring, which can be drawn out in different degrees and with different angles from the housing and due to its inherent elasticity maintains its linearity. In the housing are provided means for recording the degree of said drawing-out and, respectively, the angle so that it is possible in this way in one single operation to obtain the course and distance to a given goal. The navigation appliance according to the invention further comprises a display for indicating desired figures and tangents for setting desired calculation operations, which are desired to be carried out in the device and it also comprises means for setting the distance scale and, respectively, drift.

0110844

Navigation appliance
--------------------

For the transfer of information, for example, from and
to nautical charts, graduated arcs. rules, calipers and
a certain amount of mathematical knowledge are used. In
addition, training is required in order not to make
errors due to stress which may have catastrophic consequences on the course. For untrained people, especially
the drift correction can give rise to problems, and
also the fact that the scale of length of the nautical
charts varies between different parts of the chart. In
view of the problems experienced in connection with navigation, there is, thus, a demand of simplifying navigation.

The invention, therefore, has the object to provide an auxiliary
device, which facilitates the work with chart or nautical
chart and reduces the requirement of mathematical knowledge
and also reduces the risk of mismeasurements of various
kind.

This object is achieved according to the present invention
by means of a device, which comprises a stationary housing
or casing and a pointer, which can be drawn out therefrom
to optional length and also in different optional directions,
preferably covering an angular range of 180°. The device
further is provided with means for representing the distance,
through which the pointer has been drawn out and, respectively, its angle in relation to the course. It is hereby
possible in one single operation to read both the course and
the distance and alternatively to plot them on a nautical chart. At a suitable further development of the invention, which is described below by way of an embodiment, the device can be provided with electronic evaluation means for recording the distance through which the pointer has been drawn out, and also can comprise means for carrying out the calculations required for obtaining the desired values. The device preferably can be designed capable to be calibrated for the scale so that adjustment to the local scale of the nautical chart can be made. In addition, the drift correction can be automatized.

The pointer preferably consists of a prestressed helical spring (which also implies the advantage that even the length of curved courses can be measured without too much trouble), which renders it possible to store the pointer reeled in the housing, which may be small in spite of a pointer length of the magnitude 50 cm. By means of the flexible pointer the distance even of curved ways can be measured rapidly and simply.

The angles and drawn-out length, of course, also can be evaluated in a purely mechanic way, but in view of the easiness of obtaining calculation results by using electronic devices, these probably are to prefer. For the recording of drawn-out length and, respectively, angle, for example, potentiometers can be used and, of course, also inductive optical and capacitive measuring methods. It can be imagined, for example, an optoelectric counting of the number of helical turns where addition or subtraction is controlled by the movement by means of a contact capable to be taken along and be caused to contact one contact when the pointer
is being drawn out and a second contact when the pointer
is being retracted. The spring or pointer also per se
may be a potentiometer.

Before describing the invention in greater detail by way
of an embodiment thereof, it may be mentioned that the
safety or accuracy of measuring by the appliance according
to the invention is better than the one obtained by conventional
methods.

An embodiment of the invention is described in greater
detail in the following, with reference to the accompanying
dr-wings, in which

Fig. 1    shows the device in a view from above and positioned
          on a schematic nautical chart,

Fig. 2    shows the device in a lateral view by way of a section,

Fig. 3    shows the device in a view from below, where the
          bottom is removed, and

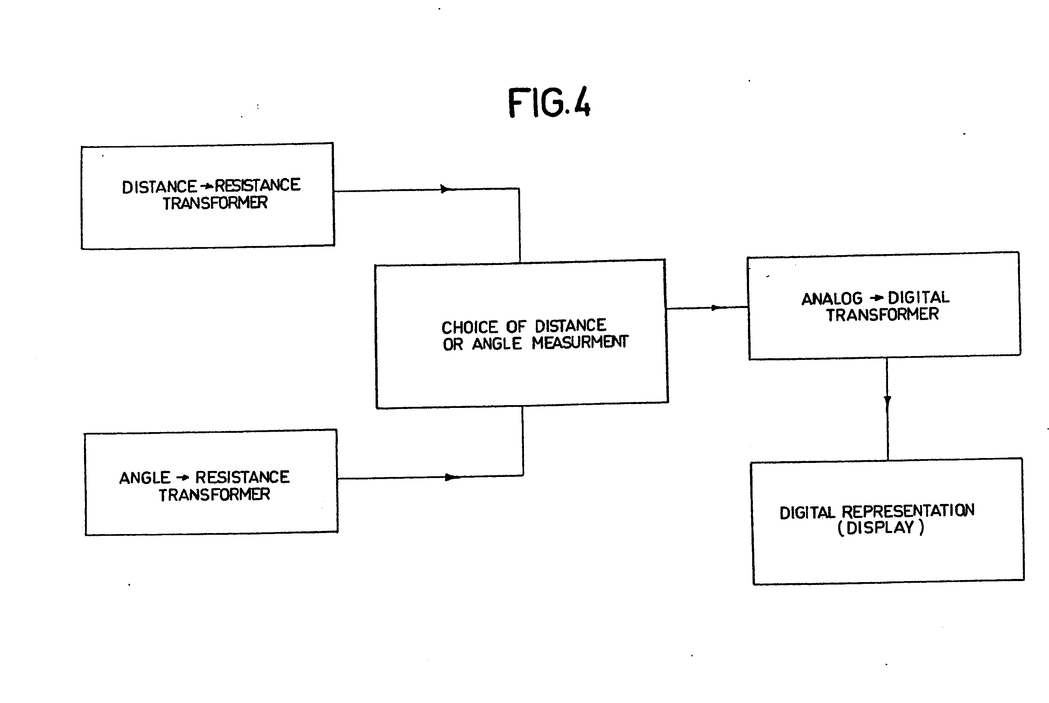

Fig. 4    shows in a schematic manner how the electronics
          in the device can be imagined to be arranged.

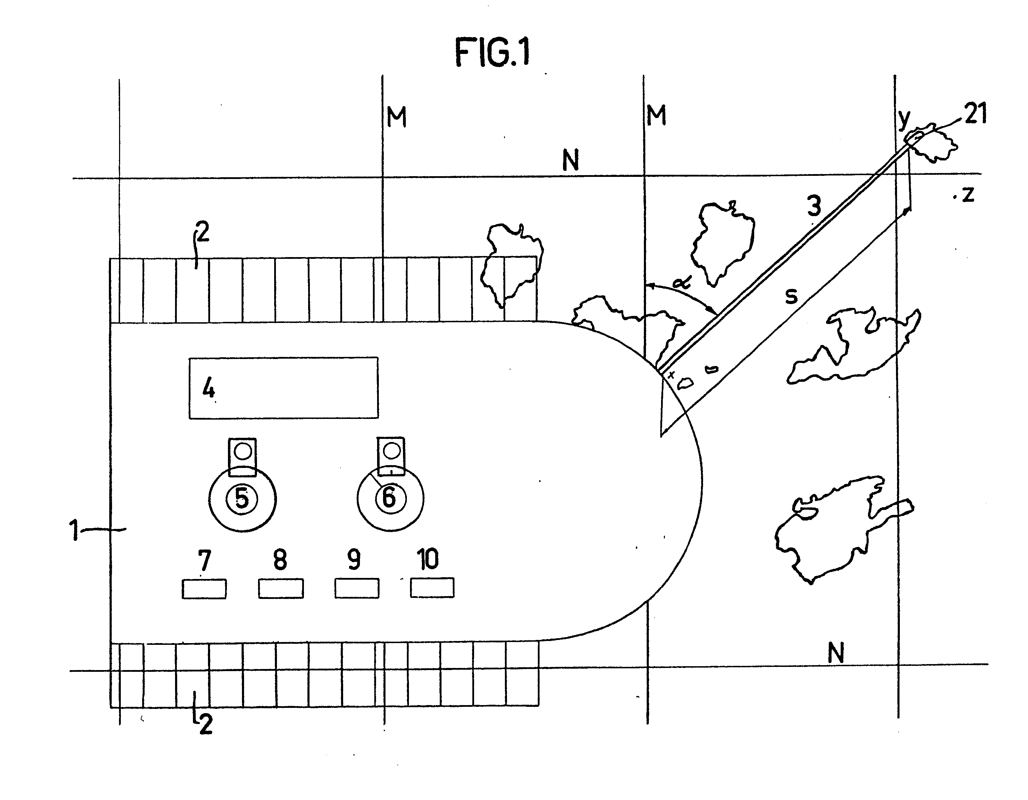

As appears from Fig. 1, the device according to the invention
comprises a housing 1, which is provided with rules 2 at
the long sides for rendering possible parallel alignment
with the meridian M of the nautical chart. From the housing
the measuring and directional spiral 3 has been drawn out,
so that its point of intersection with a collar 21 attached
thereon  is located in the coordinate Y from a starting point Y,
whereby an angle $\alpha$ (which is recorded) is formed between
a meridian M and the direction in question. When the measuring helical 3 has been drawn out, the corresponding distance S is recorded in the device. The device further comprises a display, which preferably consists of liquid crystals. 5 and 6 are two potentiometers provided with locking means. The potentiometer 5 determines the distance scale, and the potentiometer 6 is used for setting the drift. This potentiometer, thus, is set to zero when there is no drift. The device further comprises four keys, of which the key farthest to the left 7 is used for switching the device on and off. The next following key 8 carries out a scale switch in order to increase the possible scale range with the potentiometer 5. The next key 9 carries out a switch corresponding to if the measuring pointer of the device is directed to the left or right, i.e. the key 9 carries out a switch between the angular range $0-180^{\circ}$ and, respectively, $180-360^{\circ}$: The last key 10 carries out a switch between course and distance for the display.

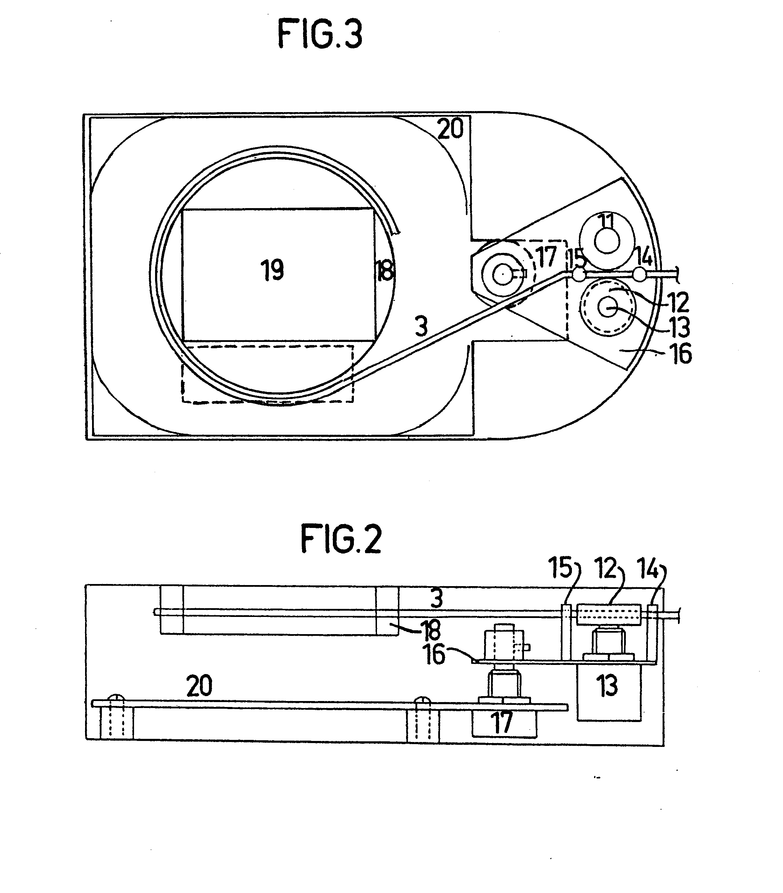

The drawn-out length of the measuring spiral corresponds to the distance in question, provided that the spring length between two adjacent latitude parallels (N) is calibrated to 5,0 by means of the potentiometer 5 and key 8 or after the "scale" (which usually is drawn) of the chart. From Fig. 3 where the device is shown with its bottom plate removed, it appears that the measuring spiral 3 in the device is reeled on a drum or roll 18 when it is being pushed into the device. The measuring spring 3 runs between two rolls 11 and 12 which are located near the place where the spring is drawn out of the house. To one of said rools 12 a potentiometer 13 is coupled which, thus, changes its resistance value according to how much of the measuring spiral 3 has been drawn out. The rolls 11 and 12 together with the guides 14 and 15 yield a defined starting direction for the measuring spiral 3 relative to the segment or arm 16, on which the rolls with associated guides and potentiometers are mounted. Due to the fact that the arm or segment 16 is mounted for rotary motion at the housing and connected to a potentiometer 17, this potentiometer 17 indicates by its resistance the angular position for the arm and thereby also for the measuring spiral 3. Centrally in the roll 18 a battery space 19 is provided for receiving the spiral 3, and above said space at the upper surface a plate 20 (in this case the printed circuit card for the electronics) is attached which carries the potentiometer 17 with associated arm 16, and also keys and other electronic components.

The potentiometer 13 is of the type capable to be turned through several revolutions, which yields access to a relatively long starting distance for the spring. The potentiometer 17, however, is of a type with a substantially shorter turning range, because it needs be turned only over 180°. The distance pointer preferably consists of a helical spring of about 2 mm stainless steel, and the two wheels 11 and 12 preferably are rubber wheels. It may be suitable, further, to provide automatic shut-off (after 2 minutes) and indication of too low battery voltage. In addition to liquid crystals CMOS circuits may suitably be used for obtaining low current consumption, so that a simple 9 volt battery is sufficient to last for a whole sailing season. By using potentiometers with good precision and linearity, very few errors are obtained. The measuring spiral portion located outside the collar 21 serves as handle.

In the following the mode of operation of the device is described briefly in order to additionally elucidate the invention.

Setting of the distance scale.

Position the measuring spiral between two adjacent latitude parallels N so that the collar 21 of the measuring spiral is located in one line, and the semi circle portion of the housing 1  tangent the other line with the measuring spiral in parallel with a meridian. Put thereafter the switch 8 in such a position that with the potentiometer 5  5,0 can be adjusted in on the display 4. Alternatively the measuring scale of the chart can be used, but this deteriorates the accuracy. The switch 10 shall be in position distance.

Lock the potentiometer 5 (locking screw). The distance scale now is adjusted to nautic miles after the chart used and its scale. If the scale is desired to be in km. adjust so that 4 shows 1.852 x 5,0 = 9,3, or directly after

the scale.

Course and distance measurement.

Place the measuring spiral 3 between the points x and y with the collar 21 in the point y and the graduated arc so that it contacts the point x. Then turn the rule 2 so that its lines are in parallel with the meridians M of the chart.

With the switch 10 in its outermost position, the display
shows the course in grades, and with 10 depressed the
distance in question.

Adjustment of drift.

When sailing on course 27 grades between the points x and y
and arriving at point z instead of point y, place the
measuring spiral 3 between the points x and z. Thereafter adjust in the old course (27 grades) by means of the potentiometer 6 on the display. Lock this setting (locking screw). The
next course being taken out is automatically compensated
for the drift (if similar conditions prevail).

Measuring the latitude.

Measure the distance from the point in question and the
nearest latitude parallel with the switch 10 in position
distance. The display 10 then shows this value in minutes
and seconds. This value is added to the value indicated
at the latitude line, from which the measurement was made,
if the point is located above the latitude line, otherwise
subtraction is to be made from the value shown by display 4.

Measuring the longitude.

The same method as at latitude measurement, but the device
must be adjusted in so that it shows 5,0 between two
meridians with the tangent 10 in position distance with the
collar of the spiral in one meridian and the graduated
arc contacting the other meridian, and the measuring spiral
in parallel with a latitude parallel N.

Do not forget to adjust back 5 after completed measurement,
so that the distance scale is correct.

WHAT I CLAIM IS:

1.   A device or appliance for navigation, especially for determining from a nautical chart position, course and distance, c h a r a c t e r i z e d   i n   that it comprises a housing portion, which can be placed in parallel with a meridian, and a member or pointer, which can be drawn out in the desired direction and a desired length, and the device records and indicates the angle and, respectively, length of the member drawn out, which thereby corrsponds to the course and distance.

2.   A device as defined in claim 1, c h a r a c t e r - i z e d   i n   that the member capable to be drawn out is stored reeled in the housing when it is not drawn out.

3.   A device as defined in claim 1 or 2, c h a r a c t - e r i z e d   i n   that the pointer is a helical spring.

4.   A device as defined in any one of the claims 1-3, c h a r a c t e r i z e d   i n   that the recording occurs electrically, for example by means of potentiometers, and the resulting values are processed and represented electronically.

5.   A device as defined in any one of the preceding claims, c h a r a c t e r i z e d   i n   that locking means are provided for locking the drawn-out length and, respectively, angle of the pointer in the position in question.

6.   A device as defined in any one of the preceding claims,

0110844

characterized    in    that it comprises also electronic units for automatizing desired calculations.

7.    A device as defined in any one of the preceding claims, characterized    in    that the pointer consists of a spiral spring reeled in the housing, which spring agsinst the action of a spring can be drawn out of said housing, that the spring passes through a guide means attached on an arm, which can be turned through an angle in relation to the housing, and the guide on the arm comprises rolls abutting the spring for detecting the drawn-out length while the angle is recorded by the angular position of the arm in relation to the housing.

# FIG.1

# FIG.3

# FIG.2

# FIG.4

DISTANCE → RESISTANCE TRANSFORMER

CHOICE OF DISTANCE OR ANGLE MEASURMENT

ANALOG → DIGITAL TRANSFORMER

ANGLE → RESISTANCE TRANSFORMER

DIGITAL REPRESENTATION (DISPLAY)

3/3

0110844

# 0110844

**European Patent Office**

## EUROPEAN SEARCH REPORT

Application number

EP 83 85 0237

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-1 140 562  (D.W. STUART JONES)<br>* Page 1, lines 63-75; page 4, lines 3-22 * | 1,4 | G 21 C  21/20 |
| Y | DE-B-1 211 408  (DECCA LTD.)<br>* Column 1, lines 32-45; claim 2 * | 1,4 | |
| A | US-A-4 172 285  (H. YOSHIDA et al.)<br>* Column 2, lines 29-35, 40-43 * | 4,6 | |

| TECHNICAL FIELDS SEARCHED (Int. Cl. 3) |
|---|
| G 01 C  21/00<br>G 01 C  23/00 |

The present search report has been drawn up for all claims

| Place of search<br>THE HAGUE | Date of completion of the search<br>14-12-1983 | Examiner<br>PRATSCH H.R. |
|---|---|---|